# EUROPEAN PATENT APPLICATION

(11) **EP 1 431 889 A1**
(43) Date of publication of application: **23.06.2004**
(21) Application number: 02762798.3
(22) Date of filing: 16.08.2002
(51) Int. Cl.: G06F 17/50

(54) **METHOD FOR OPTIMIZING AREA SHAPE**

(30) Priority: 21.08.2001 JP 2001249789
(71) Applicant: Nagoya Industrial Science Research Institute, Nagaya-shi, Aichi 460-0008 (JP)
(72) Inventor: AZEGAMI, Hideyuki 5-104, Takashi-jutaku, Toyohashi-shi, Aichi 441-8105 (JP); TAKEUCHI, Kenzen 202, Fuchu-orientopuraza, Fuchu-shi, Tokyo 183-0011 (JP)
(74) Representative: Murgatroyd, Susan Elizabeth
(86) International application number: PCT/JP2002/008334
(87) International publication number: WO 2003/017147

(57) **Abstract**

Assuming a domain as an object of a body or field to be a linear elastic body, a domain (1) as the object of the body or field and a boundary (2) are determined, and a constraint to domain variation (3) is provided. Further, a uniform distribution spring (6) is set between each point of the boundary (2) and each point of a fixed coordinate system (5) positioning on a normal line of the boundary (2) from the former point. Thereby, when an objective functional is minimized, the deformation position of the domain (1) where the reaction force of the domain (1) generated by making a boundary force (4) in proportion to the negative value of a calculated shape gradient function act on the domain (1) regarded as the linear elastic body, balances the reaction force generated on the distribution spring (6), is considered to be a domain shape change position of the linear elastic body, and the domain shape of the domain (1) as the object is changed. Such change processing of the domain shape is then repeated to optimize the domain shape.

## Description

### TECHNICAL FIELD

The present invention relates to a domain shape optimization method for intending the optimization of a domain shape in which a body or field such as an elastic body, a heat conduction field, a flow field, or a sound field is defined, by moving the boundary when obtaining the shape of optimizing the condition of the body or field, under a constraint determined on design upon designing a machine or a structure.

### BACKGROUND ART

A problem of analyzing the condition of an elastic body, a heat conduction field, a flow field, a sound field, or the like, can be expressed as a boundary value problem of partial differential equation. Using as a set object a domain shape in which such a partial differential equation boundary value problem is defined, for example, a problem of minimizing, under a volume constraint or the like, an objective functional that returns an evaluation value of real number when being given a condition, a problem of minimizing the volume under a condition in which a constraint functional that returns an evaluation value of real number when being given a condition is restricted into a prescribed value or less, or the like, is a shape optimization problem.

In such a shape optimization problem, the rate of variation of the objective functional to the quantity of movement when the boundary of the domain as an object is moved in an outward normal direction in order to satisfy the constraint, can be theoretically defined as a shape gradient function (so-called sensitivity). This shape gradient function is represented by a vector function distributed in a definition range of the boundary of the domain and having its positive direction in an outward normal direction of the boundary. The shape gradient function is the sum of the rate of variation of the objective functional and the result of multiplying the rate of variation of the volume constraint or constraint functional by a Lagrange multiplier. The rate of variation of the objective functional and the rate of variation of the constraint functional are calculated from a solution of the boundary value problem of partial differential equation to a condition field and a solution of the boundary value problem of partial differential equation to an adjoint field derived by adjoint variable method. The Lagrange multiplier is determined in order to satisfy the constraint to the domain variation. In actual calculation of the shape gradient function, the boundary value problem of partial differential equation of the condition field or adjoint field is calculated by finite element method, boundary element method, or the like. On the basis of the definition of the shape gradient function, when the boundary is moved in the direction of the shape gradient function, the objective functional rises with satisfying the constraint. Therefore, if the boundary is moved in the negative value direction of the shape gradient function, the objective functional can be minimized with satisfying the constraint. In actual shape optimization, with again calculating the shape gradient function to updated shapes, by repeating the shape update until the value of the objective functional converges, the optimum shape can be obtained. As one of such domain shape optimization methods, for example, a method called traction method by the inventor of this case and so on has been proposed (for example, see Hideyuki Azegami "One Solution of Domain Optimization Problem" Transactions of the Japan Society of Mechanical Engineers. A, vol.60, No.574, pp.1479-1486, June, 1994). The traction method is a method in which the domain as an object is regarded as a linear elastic body and the boundary of the domain is moved using the deformation when the boundary force in proportion to the negative value of the shape gradient function is exerted.

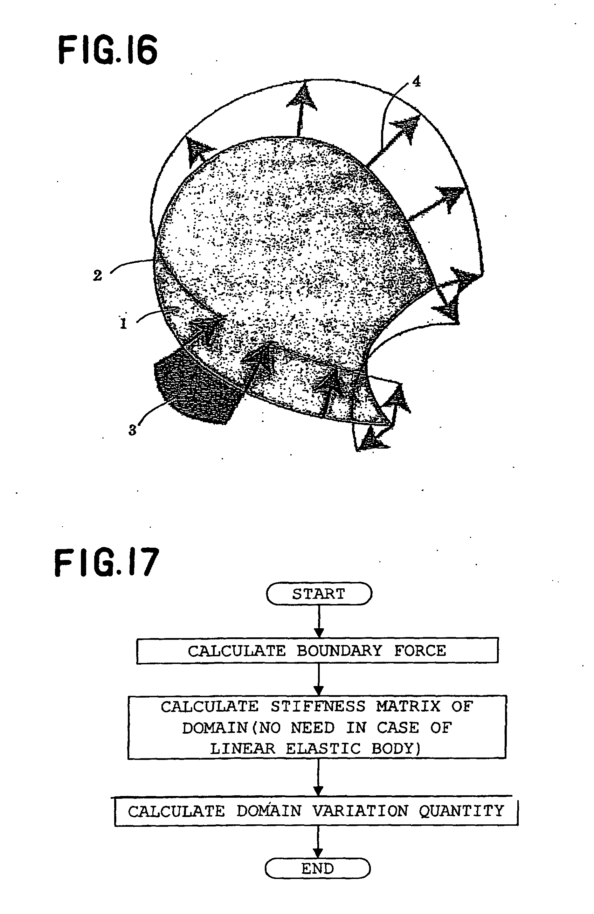

As an example of traction method, the boundary movement of the domain as illustrated in FIG. 16 will be described. A domain 1 as an object of a body or field and a boundary 2 are determined and further a constraint 3 to the domain variation is provided. On each point on this boundary 2, it is assumed that a shape gradient function has been calculated. At this time, assuming that the domain 1 as an object of a body or field is an linear elastic body, by making a boundary force 4 in proportion to a negative value of the shape gradient function act in an outward normal direction of the boundary 2, a boundary movement is made to occur.

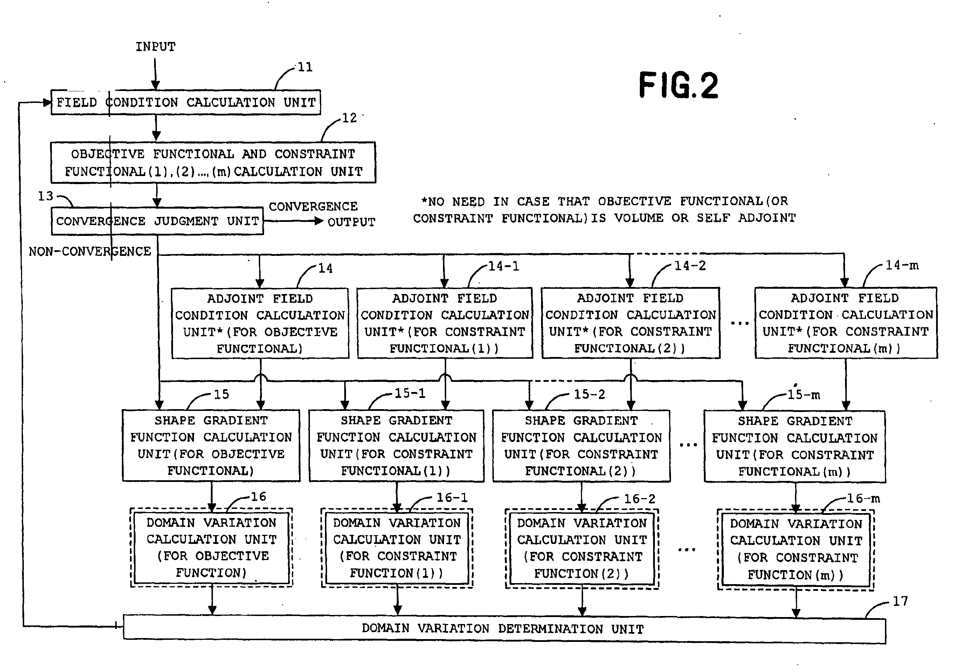

FIG. 2 is a block diagram of a domain shape optimization apparatus for obtaining the optimum conditions of the domain variation. This domain shape optimization apparatus first calculates field conditions in a field condition calculation unit 11. On the basis of this, the domain shape optimization apparatus then calculates an objective functional and various constraint functionals (1), (2), ..., (m) in an objective functional and constraint functionals (1), (2), ..., (m) calculation unit 12. It should be noted here that the objective functional and the constraint functionals represent negative values of potential energy to the deformation, that is, displacement by field conditions, for example, static load and forcible displacement, and are functionals using as variations displacement representing a condition. Next, in a convergence unit 13, the calculation result is judged not to converge in case of the first time. In case of the second time or later, by comparison with the last result, it is judged whether or not the calculation result converges. In case of the calculation result having converged, the current domain shape is output as the optimum shape.

In case of the calculation result not having converged, in adjoint field condition calculation units 14, 14-1, 14-2, ..., 14-m corresponding to the objective functional and constraint functionals (1), (2), ..., (m), conditions of the adjoint field are calculated. On the basis of the calculated conditions of the adjoint field and the field condition calculated in the field condition calculation unit 11, in shape gradient function calculation units 15, 15-1, 15-2, ..., 15-m, elements of the respective shape gradient functions corresponding to the objective functional and constraint functionals (1), (2), ..., (m) are calculated. On the basis of the calculation results of the shape gradient functions, in domain variation calculation units 16, 16-1, 16-2, ..., 16-m, the respective domain variation quantities corresponding to the objective functional and constraint functionals (1), (2), ..., (m) are calculated. Each of the domain variation calculation units 16, 16-1, 16-2, ..., 16-m calculates the domain variation quantity according to "operation program" shown in FIG. 17. That is, a boundary force is first calculated and a stiffness matrix of the domain is then calculated, and on the basis of it, a domain variation quantity is calculated.

On the basis of the domain variation quantity calculated in each of the domain variation calculation units 16, 16-1, 16-2, ..., 16-m, in a domain variation determination unit 17, a Lagrange multiplier is determined such that the constraint is satisfied to the domain variation. By the sum of the domain variation quantities multiplied by the Lagrange multiplier, the whole domain variation quantity is determined. On the basis of the determination result of the domain variation, after the whole domain including the boundary is varied, the field condition is again calculated in the field condition calculation unit 11 and further objective functional and constraint functionals (1), (2), ..., (m) are calculated. Until the convergence judgment unit 13 judges the calculation result to converge, the same operation process is repeatedly performed.

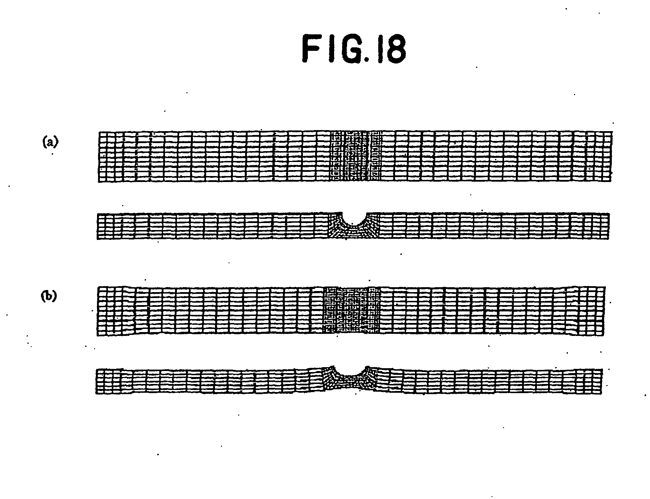

However, by the above traction method, for example, in a problem in which the shape constraint is loose, there is a case wherein the objective functional does not converge. For example, as illustrated in FIG. 18(a), in case that the shape for minimizing the negative value of potential energy, that is, maximizing the stiffness under a volume constraint with restricting the domain variation only at both end boundaries for a notched bar-like three-dimensional linear elastic body receiving tensile load at both ends, even when a shape change by traction method was repeatedly performed, as illustrated in FIG. 18(b), the three-dimensional linear elastic body could not be converged into a non-notched bar as the optimum shape.

The present invention is to solve the above-described problem and aims to provide a domain shape optimization method in which a stable convergence solution can be obtained even to a problem in which no convergence solution can be obtained by the conventional traction method.

### DISCLOSURE OF THE INVENTION

A first aspect of the present invention is a domain shape optimization method for obtaining a shape of a body or field in which an objective functional is minimized (maximization is regarded as minimization of a negative value of the objective functional) under a predetermined constraint on design, the method being characterized by:
calculating a shape gradient function of each point on a boundary of a domain,
regarding the domain as an object of the body or field as a linear elastic body,
disposing a uniform distribution spring between each point on the boundary of the domain and each point of a fixed coordinate system positioning on a normal line of the boundary from the former point,
changing a domain shape of the domain as the object of the body or field using deformation of each point on the boundary when a boundary force in proportion to a negative value of the calculated shape gradient function is exerted, and
then repeating such change processing to optimize the domain shape.

Here, the stiffness of the distribution spring is determined in advance by analysis in accordance with conditions of the individual domain as the object. The domain shape optimization method according to the present invention is called spring-loaded traction method.

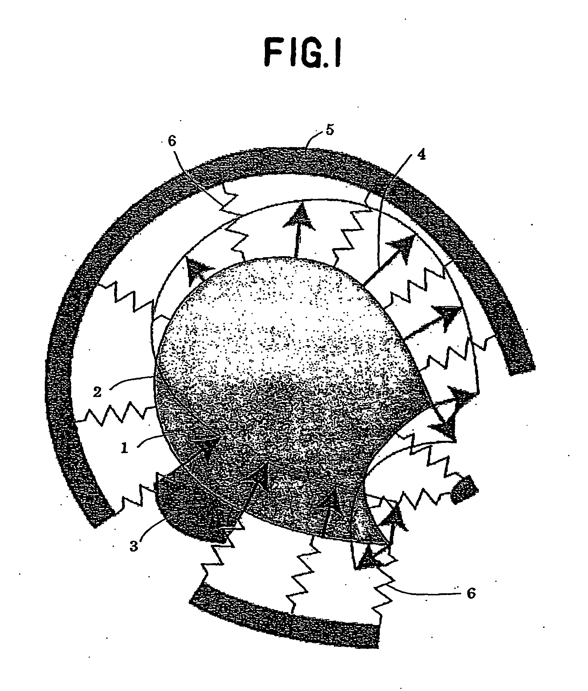

In this invention, when the boundary movement of the domain as an object of a body or field is considered, as illustrated in FIG. 1, the shape of the domain 1 as the object of the body or field is expressed by a boundary 2, and a constraint 3 to domain variation is provided. The domain 1 as the object of the body or field is regarded as a linear elastic body. Further, a uniform distribution spring 6 is set between each point of the boundary 2 and each point of a fixed coordinate system 5 positioning on a normal line of the boundary 2 from the former point. And, the deformation position of the domain 1 where the reaction force of the domain 1 generated by making the boundary force 4 in proportion to the calculated negative value of the shape gradient function act on the domain 1 of the linear elastic body, balances the reaction force generated in the distribution spring 6, is considered to be a domain shape change position of the linear elastic body, and thereby the domain shape of the domain 1 as the object is changed. Then, such change processing of the domain shape is repeated, whereby the domain shape can be optimized.

A second aspect of the present invention is a domain shape optimization method for minimizing a negative value of potential energy with a volume constraint to deformation of a linear elastic body by static load and forcible displacement, that is, maximizing the stiffness of the body, the method being characterized by:
calculating a shape gradient function of each point on a boundary of a domain of the linear elastic body as an object,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

In relation to the linear elastic body, this invention can be applied also to cases of KS functional minimization of Mises stress with a volume constraint to deformation by static load and forcible displacement, KS functional minimization of displacement with a volume constraint to deformation by static load and forcible displacement, square error part boundary integral minimization of a specified displacement mode and a displacement to deformation by static load and forcible displacement, minimization of the negative value of a buckling load coefficient with a volume constraint to the deformation by static load and forcible displacement, minimization of the negative value of partial on-boundary mean displacement with a volume constraint and a potential energy negative value constraint to deformation by static load and forcible displacement, minimization of the negative value of natural frequency with a volume constraint to natural oscillation, strain energy frequency response minimization with a volume constraint to frequency response, kinetic energy frequency response minimization with a volume constraint to frequency response, external force work absolute value frequency response minimization with a volume constraint to frequency response, external force work absolute value time integral minimization with a volume constraint to transient response, and so on.

A third aspect of the present invention is a domain shape optimization method for minimizing a volume under conditions in which a negative value of potential energy to deformation of a linear elastic body by static load and forcible displacement is restricted to a constraint value or less, the method being characterized by:
calculating a shape gradient function of each point on a boundary of a domain of the linear elastic body as an object,
disposing a uniform distribution between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

To deformation of the linear elastic body, like the domain shape optimization of minimizing the negative value of potential energy with a volume constraint, the domain shape optimization of minimizing the volume under conditions wherein the negative value of potential energy is restricted to a constraint value or less is also possible.

A fourth aspect of the present invention is a domain shape optimization method for minimizing a negative value of potential energy with a volume constraint to deformation of a continuous body having material non-linearity and geometrical non-linearity by static load and forcible displacement, that is, maximizing the stiffness of the body, the method being characterized by:
calculating a shape gradient function of each point on a boundary of a domain of the continuous body as an object having material non-linearity and geometrical non-linearity,
regarding the domain of the continuous body as the object having material non-linearity and geometrical non-linearity as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when boundary force in proportion to the negative value of the calculated shape gradient function is exerted, and
then repeating such change processing of the domain shape to optimize the domain shape.

Thus, even in case of the continuous body having material non-linearity and geometrical non-linearity, the domain shape can be optimized by the same processing as that of the above linear elastic body. As for the continuous body having material non-linearity and geometrical non-linearity, this invention can be applied also to a case of square error part boundary time integral minimization of a specified deformation mode and a response displacement to deformation by static load and forcible displacement.

A fifth aspect of the present invention is a domain shape optimization method for minimizing a volume under conditions in which a negative valve of potential energy to deformation of a continuous body having material non-linearity and geometrical non-linearity by static load and forcible displacement is restricted to a constraint valve or less, the method being characterized by:
calculating a shape gradient function of each point on a boundary of a domain of the continuous body as an object having material non-linearity and geometrical non-linearity,
regarding the domain of the continuous body as the object having material non-linearity and geometrical non-linearity as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

To deformation of the continuous body having material non-linearity and geometrical non-linearity, like the domain shape optimization of minimizing the negative value of potential energy with a volume constraint, the domain shape optimization of minimizing the volume under conditions wherein the negative value of potential energy is restricted to a constraint value or less is also possible.

A sixth aspect of the present invention is a domain shape optimization method for minimizing a square error part boundary integral of a specified temperature distribution and a temperature distribution with a volume constraint to a stationary temperature of a heat conduction field, the method being characterized by:
calculating a shape gradient function of each point on a boundary of a domain of the heat conduction field as an object,
regarding the domain of the heat conduction field as the object as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

Thus, even in case of the heat conduction field, the domain shape can be optimized by the same processing as that of the above linear elastic body. As for the heat conduction field, this invention can be applied also to cases of heat radiation quantity maximization with a volume constraint to the stationary temperature, and square error part domain time integral minimization of a specified temperature gradient and a temperature gradient with a volume constraint to the non-stationary temperature..

A seventh aspect of the present invention is a domain shape optimization method for minimizing a negative value of potential energy by thermal expansion distortion with a volume constraint to a stationary temperature of a heat conduction linear elastic body, the method being characterized by:
calculating a shape gradient function of each point on a boundary of a domain of the heat conduction linear elastic body as an object,
regarding the domain of the heat conduction linear elastic body as the object as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

Thus, even in case of the heat conduction linear elastic body, the domain shape can be optimized by the same processing as that of the above linear elastic body.

A eighth aspect of the present invention is a domain shape optimization method for minimizing a pressure loss with a volume constraint to a stationary flow rate and pressure of a Stokes flow field, the method being characterized by:
calculating a shape gradient function of each point on a boundary of a domain of the Stokes flow field as an object,
regarding the domain of the Stokes flow field as the object as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain' shape to optimize the domain shape.

Thus, even in case of the Stokes flow field, the domain shape can be optimized by the same processing as that of the above linear elastic body. Even in case of a Navier-Stokes flow field, this invention can be applied also to a case of pressure loss minimization to the stationary flow rate and pressure with a volume constraint.

A ninth aspect of the present invention is a domain shape optimization method for minimizing a square error part domain integral of a specified flow rate and a flow rate with a volume constraint to a stationary flow rate and pressure of a potential flow field, the method being characterized by::
calculating a shape gradient function of each point on a boundary of a domain of the potential flow field as an object,
regarding the domain of the potential flow field as the object as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

Thus, even in case of the potential flow field, the domain shape can be optimized by the same processing as that of the above linear elastic body. As for the potential flow field, this invention can be applied also to a case of partial domain square error integral minimization of a specified pressure distribution and a pressure distribution with a volume constraint to the stationary flow rate and pressure.

A tenth aspect of the present invention is a domain shape optimization method for minimizing a sound pressure gradient square part domain integral with a volume constraint to a stationary sound pressure of a sound field, the method being characterized by:
calculating a shape gradient function of each point on a boundary of a domain of the sound field as an object,
regarding the domain of the sound field as the object as a linear elastic body,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

Thus, even in case of the sound field, the domain shape can be optimized by the same processing as that of the above linear elastic body. As for the sound field, this invention can be applied also to a case of sound pressure square part domain integral minimization with a volume constraint to the stationary sound pressure.

An eleventh aspect of the present invention is a domain shape optimization method for minimizing a KS functional in relation to a equivalent stress under conditions in which a volume to deformation of a linear elastic body by static load and forcible displacement is restricted to a constraint value or less, that is, maximizing the strength of the body in case of equivalent stress failure criterion, the method being characterized by:
calculating a shape gradient function of each point on a boundary of a domain of the linear elastic body as an object,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

A twelfth aspect of the present invention is a domain shape optimization method for minimizing a volume under conditions in which a KS functional in relation to an equivalent stress to deformation of a linear elastic body by static load and forcible displacement is restricted to a constraint value or less, the method being characterized by:
calculating a shape gradient function of each point on a boundary of a domain of the linear elastic body as an object,
disposing a uniform distribution spring between each point on the boundary of the domain and each point of a fixed coordinate system positioning on a normal line of the boundary from the former point,
changing a domain shape of the domain as the object using deformation of each point on the boundary when a boundary force in proportion to a negative value of the calculated shape gradient function is exerted, and
then repeating such change processing of the domain shape to optimize the domain shape.

As described above, according to the present invention, to a problem of optimization in which the shape constraint is loose, for example, a problem in which portions of a slender bar other than both ends are not fixed, even in case that the result does not converge by a conventional method and thus the optimum shape can not be obtained, the calculation can be made to converge in the domain calculation variation unit by setting uniform distribution springs to balance the variation by boundary force, and thus the domain shape can be optimized. In addition, according to the present invention, there is no need of an additional shape constraint for suppressing unnecessary shape deformation causing divergence of the calculation result, which is hitherto added by the analyst per problem in order to improve the convergence. This brings about an effect that arbitrariness of the analyst does not enter and the optimum shape can be obtained only using the constraint original in the problem.

### BRIEF DESCRIPTION OF THE DRAWINGS

FIG. 1 is an explanatory view for explaining a boundary movement method by the spring-loaded traction method of the present invention.
FIG. 2 is a block diagram showing a general construction of a domain shape optimization apparatus used for carrying out the spring-loaded traction method of the present invention and the conventional traction method.

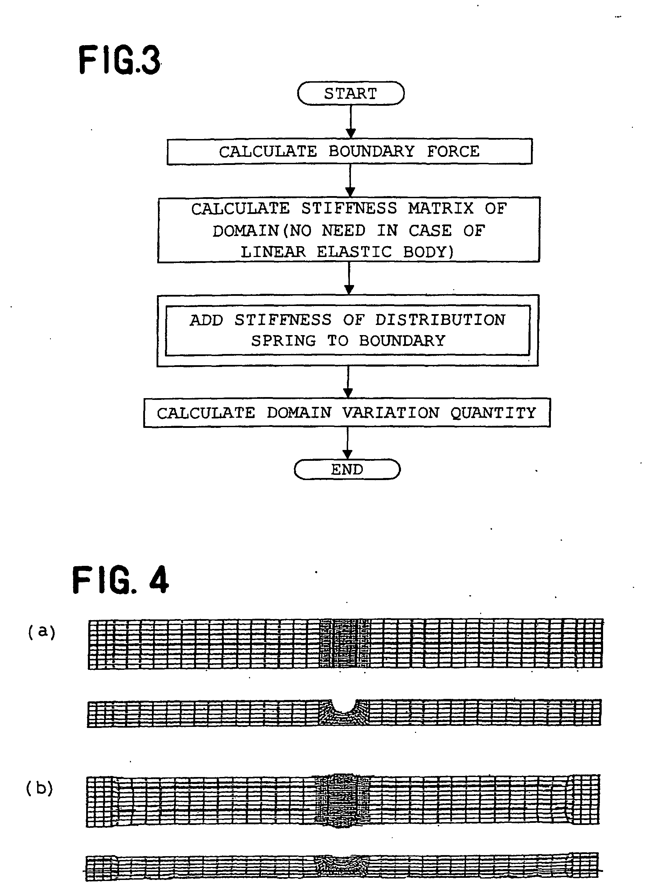

FIG. 3 is a flowchart of "operation program" according to the present invention executed in a domain variation calculation unit of the domain shape optimization apparatus.
FIGS. 4 are a plan view and a front view respectively illustrating convergence shapes before shape changes and after a shape change by the spring-loaded traction method is repeated in minimizing the negative value of potential energy with a volume constraint, that is, maximizing the stiffness of a notched three-dimensional linear elastic body receiving a tensile load at both ends as a first embodiment of the present invention.

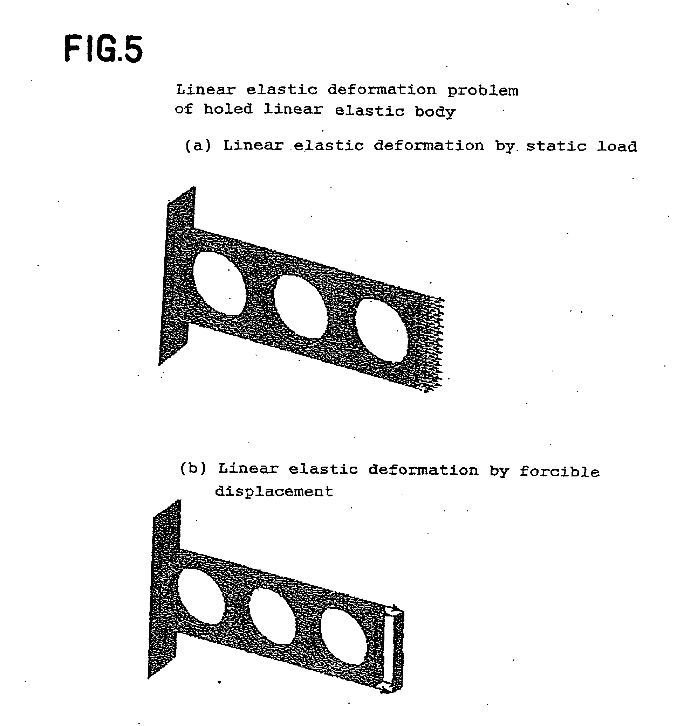

FIGS. 5 are perspective views showing a linear elastic deformation problem by static load and a linear elastic deformation problem by forcible displacement of a holed linear elastic body.

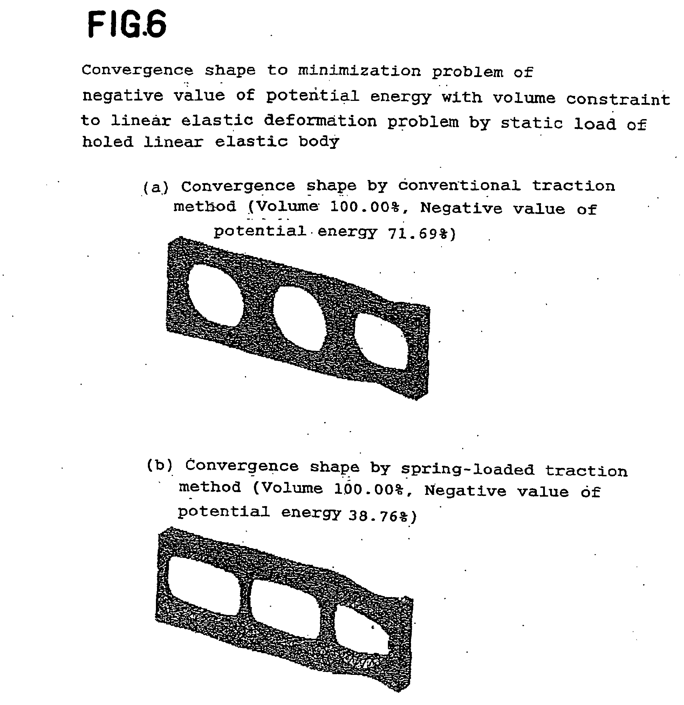

FIGS. 6 are perspective views respectively showing results of the conventional traction method and the spring-loaded traction method of the present invention as to the convergence shape to a minimization problem of the negative value of potential energy with a volume constraint to a linear elastic deformation by static load of a holed linear elastic body as a second embodiment.

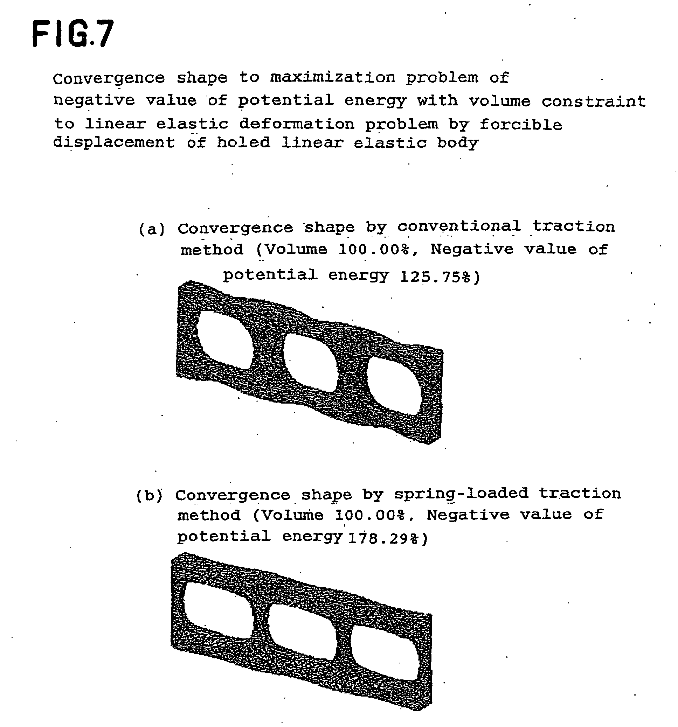

FIGS. 7 are perspective views respectively showing results of the conventional traction method and the spring-loaded traction method of the present invention as to the convergence shape to a minimization problem of the negative value of potential energy with a volume constraint to a linear elastic deformation by forcible displacement of a holed linear elastic body as a third embodiment.

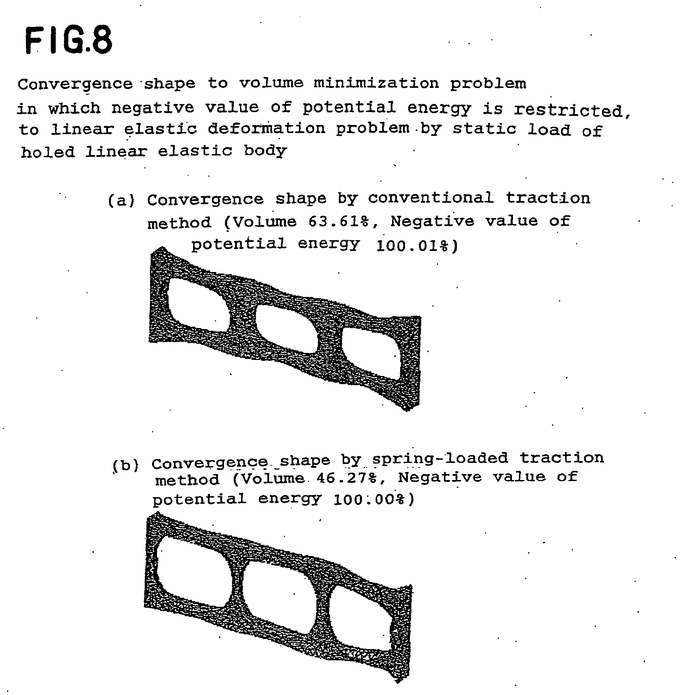

FIGS. 8 are perspective views respectively showing results of the conventional traction method and the spring-loaded traction method of the present invention as to the convergence shape to a volume minimization problem in which the negative value of potential energy to a linear elastic deformation by static load of a holed linear elastic body as a forth embodiment is restricted.

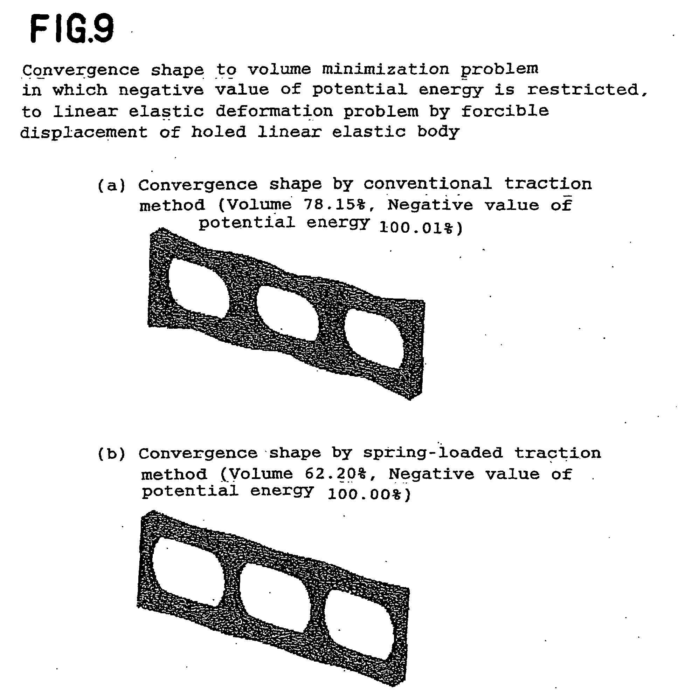

FIGS. 9 are perspective views respectively showing results of the conventional traction method and the spring-loaded traction method of the present invention as to the convergence shape to a volume minimization problem in which the negative value of potential energy to a linear elastic deformation by forcible displacement of a holed linear elastic body as a fifth embodiment is restricted.

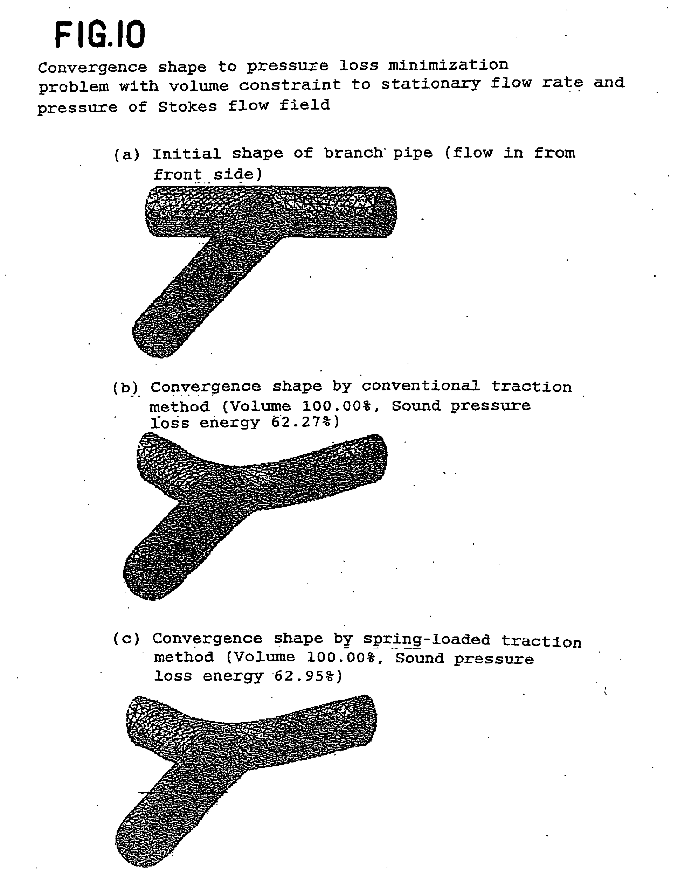

FIGS. 10 are perspective views respectively showing the initial conditions and results of the conventional traction method and the spring-loaded traction method of the present invention as to the convergence shape to a minimization problem of pressure loss with a volume constraint to the stationary flow rate and pressure of a Stokes flow field in a branch pipe as a sixth embodiment.

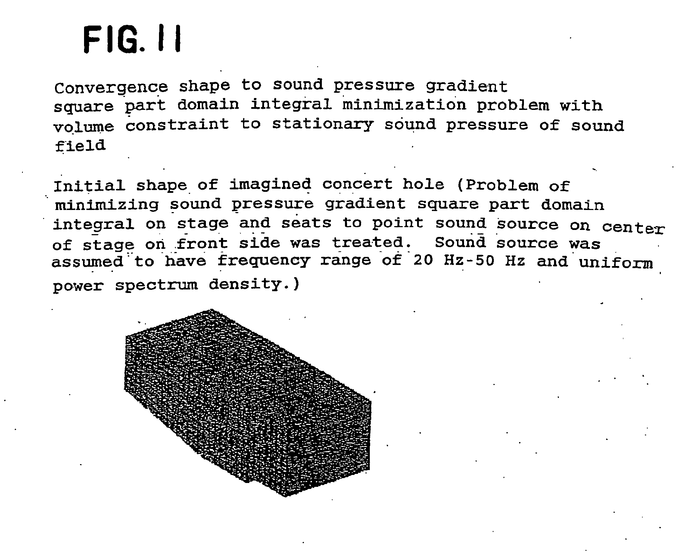

FIG. 11 is a perspective view showing the initial conditions as to the convergence shape to a sound pressure gradient square part domain integral minimization problem with a volume constraint to the stationary sound pressure of the sound field in a concert hole as a seventh embodiment.

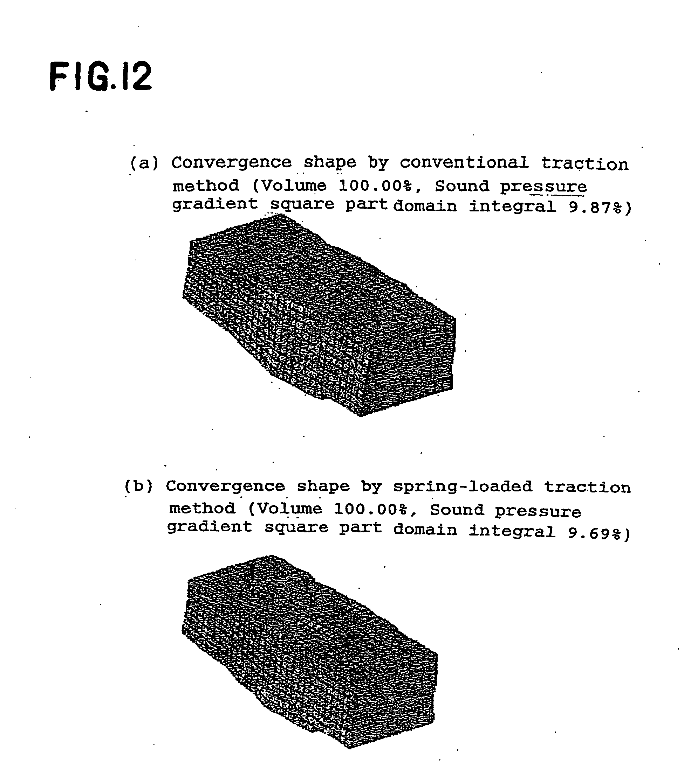

FIGS. 12 are perspective views respectively showing results of the conventional traction method and the spring-loaded traction method of the present invention as to the convergence shape to the sound pressure gradient square part domain integral minimization problem with the volume constraint to the stationary sound pressure of the sound field in the concert hole as a seventh embodiment.

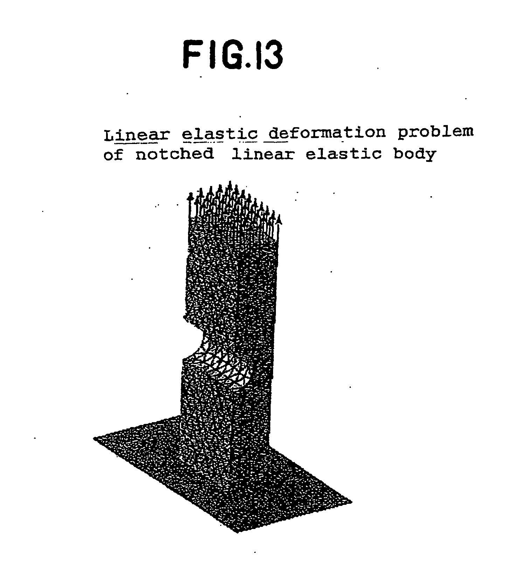

FIG. 13 is a perspective view showing a linear elastic deformation problem by static load and a linear elastic deformation problem by forcible displacement of a notched linear elastic body.

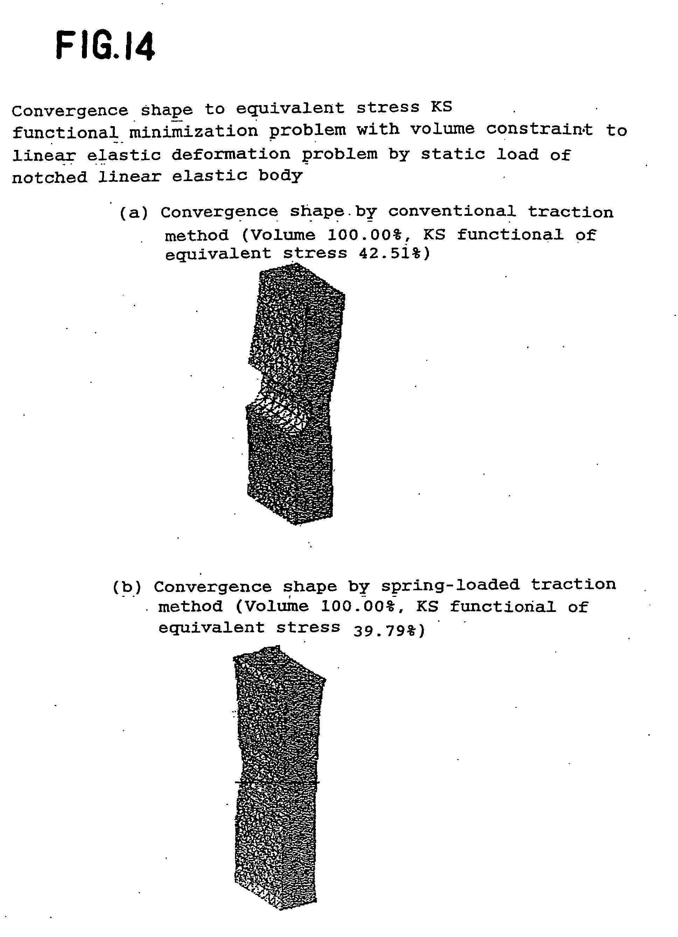

FIGS. 14 are perspective views respectively showing results of the conventional traction method and the spring-loaded traction method of the present invention as to the convergence shape to an equivalent stress KS functional minimization problem with a volume constraint to a linear elastic deformation by static load of the notched linear elastic body as an eighth embodiment.

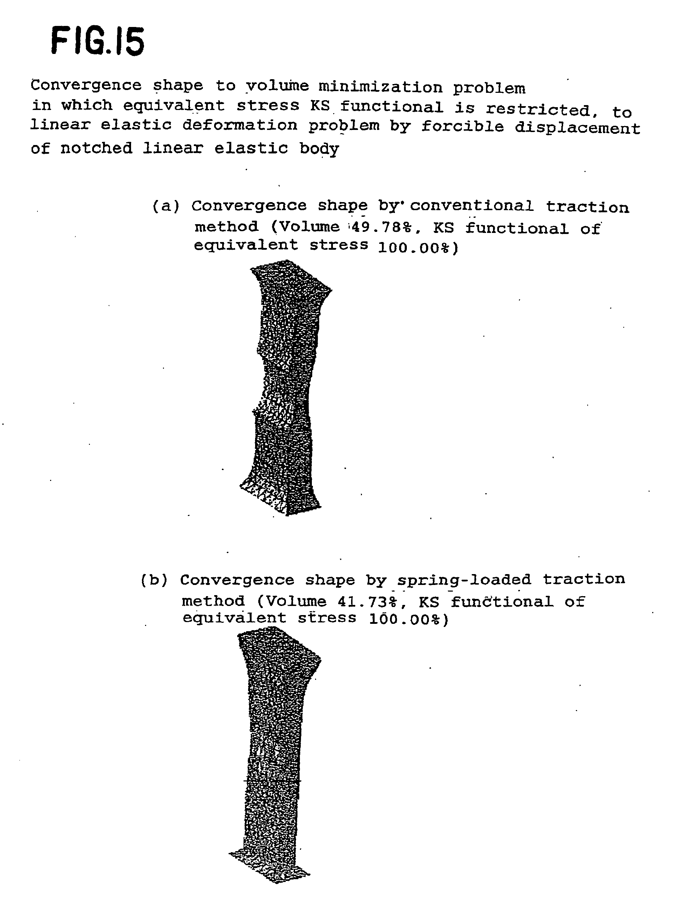

FIGS. 15 are perspective views respectively showing results of the conventional traction method and the spring-loaded traction method of the present invention as to the convergence shape to a volume minimization problem in which an equivalent stress KS functional to a linear elastic deformation by forcible displacement of the notched linear elastic body as a ninth embodiment is restricted.
FIG. 16 is an explanatory view for explaining a boundary movement method according to a traction method as prior art.
FIG. 17 is a flowchart showing "operation program" according to the prior art executed in the domain variation calculation unit of the domain shape optimization apparatus.
FIGS. 18 are a plan view and a front view respectively illustrating convergence shapes before shape changes and after a shape change by the traction method is repeated in minimizing the negative value of potential energy with a volume constraint, that is, maximizing the stiffness of a notched three-dimensional linear elastic body receiving tensile load at both ends as the prior art.

### BEST MODE FOR CARRYING OUT THE INVENTION

The present invention includes the following preferred embodiments.

### 1. First Embodiment

FIG. 4 shows a case of obtaining a shape of a notched bar-like three-dimensional linear elastic body receiving a tensile load at both ends, as a first embodiment, for minimizing the negative value of potential energy, that is, maximizing the stiffness of the body under a volume constraint with restricting the domain variation only at both end boundaries. The domain shape optimization apparatus for obtaining the optimum domain shape is the same as that shown in the block diagram of the above FIG. 2. FIG. 3 shows a flowchart of "operation program" according to the present invention executed in the domain variation calculation unit of the domain shape optimization apparatus.

This domain shape optimization apparatus first calculates a displacement of the three-dimensional linear elastic body in the field condition calculation unit 11. On the basis of this, the domain shape optimization apparatus calculates a negative value of potential energy as an objective functional and a volume as a constraint functional in the objective functional and constraint functionals (1), (2), ..., (m) calculation unit 12. Next, in the convergence unit 13, the calculation result is judged not to converge in case of the first time. In case of the second time or later, by comparison with the last result, it is judged whether or not the calculation result converges. In case of the calculation result having converged, the current domain shape is output as the optimum shape.

In case of the calculation result not having converged, in relation to the negative value of potential energy as the objective functional and the volume as the constraint functional, conditions of an adjoint field are calculated in the adjoint field condition calculation units 14 and 14-1 corresponding to the negative value of potential energy and the volume, respectively. Here, because self adjoint in which the adjoint field coincides with the condition field is established in case that the objective functional is the negative value of potential energy, the result of the field condition calculation unit 11 is substituted for the adjoint field condition calculation unit 14. At this time, in the shape gradient function calculation unit 15 for the objective functional, a negative value of strain energy density as a shape gradient function to the negative value of potential energy is calculated. Further, in case that the constraint functional is volume, because the shape gradient function to the volume is one, the adjoint field condition calculation unit 14-1 is omitted and one as the shape gradient function to the constraint functional is set in the shape gradient function calculation unit 15-1 for the constraint functional.

On the basis of the calculation results of these shape gradient functions, domain variation quantities are calculated in the domain variation calculation units 16 and 16-1. Each of the domain variation calculation units 16 and 16-1 calculates the corresponding domain variation quantity in accordance with the "operation program" shown in FIG. 3. That is, first, assuming from the geometrical shape that the outward normal direction is the positive direction, boundary forces equal to the negative values of the shape gradient functions corresponding in size to the respective ones are calculated. Next, a stiffness matrix in case that the domain is regarded as a linear elastic body is calculated. In this embodiment, because the domain is a three-dimensional linear elastic body, the stiffness matrix calculated in the field condition calculation unit 11 is substituted. Next, as illustrated in FIG. 1, a stiffness of uniform distribution springs is added to the boundary of the domain. Furthermore, a domain variation quantity is calculated as the position where the variation of the domain by the boundary force balances reaction forces of the distribution springs.

On the basis of the domain variation quantities calculated in the domain variation calculation units 16 and 16-1, the whole domain variation quantity is determined in the domain variation determination unit 17 under conditions wherein the volume constraint is satisfied. On the basis of this determination result of the domain variation, field conditions are again calculated in the field condition calculation unit 11, and further a negative value of potential energy as the objective functional and a volume as the constraint functional are calculated. Until the convergence judgment unit 13 judges the calculation result to converge, the same operation processing is repeatedly performed.

This repetition of operation processing brought about a good result in which the notched three-dimensional linear elastic body receiving a tensile load at both ends as illustrated in FIG. 4(a) converged into a non-notched bar-like three-dimensional linear elastic body as the optimum shape as illustrated in FIG. 4(b).

In this embodiment obtained was a shape wherein the stiffness is the maximum under conditions of a fixed volume. However, if the present invention is applied under conditions wherein volume is used as the objective functional and the stiffness is restricted to a fixed value or less, a shape for the minimum volume, that is, the minimum weight, can be obtained with keeping a fixed stiffness.

Next, in relation to a linear elastic deformation problem by static load and a linear elastic deformation problem by forcible displacement of a holed linear elastic body illustrated in FIGS. 5, second to fifth embodiments will be described below.

### 2. Second Embodiment

As a second embodiment, results of the conventional traction method and the spring-loaded traction method of the present invention as to the convergence shape to a minimization problem of the negative value of potential energy with a volume constraint to a linear elastic deformation by static load of a holed linear elastic body as illustrated in FIG. 5(a) are shown in FIGS. 6(a) and (b), respectively. This embodiment corresponds to the invention of claim 2. Here, as for the values of the volume and the negative value of potential energy, the rate when the value in case of the initial shape is 100% is shown. In the spring-loaded traction method of the present invention; the negative value of potential energy is about half of that in the conventional traction method. It is apparently improved.

### 3. Third Embodiment

As a third embodiment, results of the conventional traction method and the spring-loaded traction method of the present invention as to the convergence shape to a minimization problem of the negative value of potential energy with a volume constraint to a linear elastic deformation by forcible displacement of a holed linear elastic body as illustrated in FIG. 5(b) are shown in FIGS. 7(a) and (b), respectively. This embodiment corresponds to the invention of claim 2. Here, as for the values of the volume and the negative value of potential energy, the rate when the value in case of the initial shape is 100% is shown. In the spring-loaded traction method of the present invention, the degree of increase in the negative value of potential energy is not less than that in the conventional traction method. It is apparently improved.

### 4. Fourth Embodiment

As a fourth embodiment, results of the conventional traction method and the spring-loaded traction method of the present invention as to the convergence shape to a volume minimization problem in which the negative value of potential energy to a linear elastic deformation by static load of the holed linear elastic body as illustrated in FIG. 5(a) is restricted are shown in FIGS. 8(a) and (b), respectively. This embodiment corresponds to the invention of claim 3. Here, as for the values of the volume and the negative value of potential energy, the rate when the value in case of the initial shape is 100% is shown. In the spring-loaded traction method of the present invention, the change in volume is about 2/3 of that in the conventional traction method, and this result indicates that improvement is made.

### 5. Fifth Embodiment

As a fifth embodiment, results of the conventional traction method and the spring-loaded traction method of the present invention as to the convergence shape to a volume minimization problem in which the negative value of potential energy to a linear elastic deformation by forcible displacement of the holed linear elastic body as illustrated in FIG. 5(b) is restricted are shown in FIGS. 9(a) and (b), respectively. This embodiment corresponds to the invention of claim 3. Here, as for the values of the volume and the negative value of potential energy, the rate when the value in case of the initial shape is 100% is shown. In the spring-loaded traction method of the present invention, the change in volume is about 3/4 of that in the conventional traction method, and this result indicates that improvement is made.

### 6. Sixth Embodiment

As a sixth embodiment, results of the conventional traction method and the spring-loaded traction method of the present invention as to the convergence shape to a minimization problem of pressure loss with a volume constraint to the stationary flow rate and pressure of a Stokes flow field in a branch pipe as illustrated in FIG. 10(a) are shown in FIGS. 10(b) and (c), respectively. This embodiment corresponds to the invention of claim 8. Here, as for the values of the volume and the sound pressure loss energy, the rate when the value in case of the initial shape is 100% is shown. Here, the spring-loaded traction method of the present invention brought about substantially the same result as in the conventional traction method.

### 7. Seventh Embodiment

As a seventh embodiment, results of the conventional traction method and the spring-loaded traction method of the present invention as to the convergence shape to a sound pressure gradient square part domain integral minimization problem with the volume constraint to the stationary sound pressure of the sound field in a concert hole as illustrated in FIG. 11 are shown in FIGS. 12(a) and (b), respectively. This embodiment corresponds to the invention of claim 10. Here, as for the values of the volume and the sound pressure loss energy, the rate when the value in case of the initial shape is 100% is shown. Here, the spring-loaded traction method of the present invention brought about substantially the same result as in the conventional traction method.

### 8. Eighth Embodiment

Next, in relation to a linear elastic deformation problem by static load and a linear elastic deformation problem by forcible displacement of a notched linear elastic body illustrated in FIG. 13, eighth and ninth embodiments will be described.

As an eighth embodiment, results of the conventional traction method and the spring-loaded traction method of the present invention as to the convergence shape to an equivalent stress KS functional minimization problem with a volume constraint to a linear elastic deformation by static. load of the notched linear elastic body as illustrated in FIG. 13 are shown in FIGS. 14(a) and (b), respectively. This embodiment corresponds to the invention of claim 11. Here, as for the values of the volume and the equivalent stress KS functional, the rate when the value in case of the initial shape is 100% is shown. In the spring-loaded traction method of the present invention, the value of the equivalent stress KS functional is a little smaller than that in the conventional traction method, and this result indicates that improvement is slightly made.

### 9. Ninth Embodiment

As a ninth embodiment, results of the conventional traction method and the spring-loaded traction method of the present invention as to the convergence shape to a volume minimization problem in which an equivalent stress KS functional to a linear elastic deformation by forcible displacement of the notched linear elastic body as illustrated in FIG. 13 is restricted are shown in FIGS. 15(a) and (b), respectively. This embodiment corresponds to the invention of claim 12. Here, as for the values of the volume and the equivalent stress KS functional, the rate when the value in case of the initial shape is 100% is shown. In the spring-loaded traction method of the present invention, the value of the volume is about 10% smaller than that in the conventional traction method, and this result indicates that improvement is made.

In the above embodiments, shown are examples in which the present invention is applied to notched and holed three-dimensional bar-like bodies as linear elastic bodies, a branch pipe, a concert hole, and so on. However, the present invention can be applied also to other linear elastic bodies. Other than this, the present invention can be applied also to domains the objects of which are bodies or fields such as continuous bodies having material non-linearity and geometrical non-linearity, heat conduction fields, heat conduction linear elastic bodies, Stokes flow fields, Navier-Stokes flow fields, potential flow fields, and sound fields.

### INDUSTRIAL APPLICABILITY

As described above, in the domain shape optimization method of the present invention, an objective functional is minimized (maximization is regarded as minimization of the negative value of the objective functional) under a predetermined constraint on the basis of design, and thereby the optimum shape of a domain the object of which is a body or field such as a linear elastic body, a continuous body having material non-linearity and geometrical non-linearity, a heat conduction field, a heat conduction linear elastic body, a Stokes flow field, a Navier-Stokes flow field, a potential flow field, or a sound field can be obtained. The present invention is industrially useful.

## Claims

1. A domain shape optimization method for obtaining a shape of a body or field in which an objective functional is minimized (maximization is regarded as minimization of a negative value of the objective functional) under a predetermined constraint on design, the method being **characterized by**:
calculating a shape gradient function of each point on a boundary (2) of a domain (1),
regarding the domain (1) as an object of the body or field as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as an object of the body or field using deformation of each point on the boundary (2) when a boundary force (4) in proportion to a negative value of the calculated shape gradient function is exerted, and
then repeating such change processing of the domain shape to optimize the domain shape.

2. A domain shape optimization method for minimizing a negative value of potential energy with a volume constraint to deformation of a linear elastic body, by static load and forcible displacement, that is, maximizing the stiffness of the body, the method being **characterized by**:
calculating a shape gradient function of each point on a boundary (2) of a domain., (1) of the linear elastic body as an object,
disposing a uniform distribution spring (6) between each point on the boundary (2) of the domain (1) and each point of a fixed coordinate system (5) positioning on a normal line of the boundary (2), from the former point,
changing a domain shape of the domain (1) as an object using deformation of each point on the boundary (2) when a boundary force (4) in proportion to a negative value of the calculated shape gradient function is exerted, and
then repeating such change processing of the domain shape to optimize the domain shape.

3. A domain shape optimization method for minimizing a volume under conditions in which a negative value of potential energy to deformation of a linear elastic body by static load and forcible displacement is restricted to a constraint value or less, the method being **characterized by**:
calculating a shape gradient function of each point on a boundary (2 ) of a domain (1) of the linear elastic body as an object,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

4. A domain shape optimization method for minimizing a negative value of potential energy with a volume constraint to deformation of a continuous body having material non-linearity and geometrical non-linearity by static load and forcible displacement, that is, maximizing the stiffness of the body, the method being **characterized by**:
calculating a shape gradient function of each point on a boundary (2) of a domain (1) of the continuous body as an object having material non-linearity and geometrical non-linearity,
regarding the domain (1) of the continuous body as the object having material non-linearity and geometrical non-linearity as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

5. A domain shape optimization method for minimizing a volume with a stiffness constraint to deformation of a continuous body having material non-linearity and geometrical non-linearity by static load and forcible displacement, the method being **characterized by**:
calculating a shape gradient function of each point on a boundary (2) of a domain (1) of the continuous body as an object having material non-linearity and geometrical non-linearity,
regarding the domain (1) of the continuous body as the object having material non-linearity and geometrical non-linearity as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4), in proportion to a negative value of the calculated shape gradient function is exerted, and
then repeating such change processing of the domain shape to optimize the domain shape.

6. A domain shape optimization method for minimizing a square error part boundary integral of a specified temperature distribution and a temperature distribution with a volume constraint to a stationary temperature of a heat conduction field, the method being **characterized by**:
calculating a shape gradient function of each point on a boundary (2) of a domain (1) of the heat conduction field as an object,
regarding the domain (1) of the heat conduction field as the object as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

7. A domain shape optimization method for minimizing a negative value of potential energy by thermal expansion distortion with a volume constraint to a stationary temperature of a heat conduction linear elastic body, the method being **characterized by**:
calculating a shape gradient function of each point on a boundary (2) of a domain (1) of the heat conduction linear elastic body as an object,
regarding the domain (1) of the heat conduction linear elastic body as the object as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary (4) force in proportion to a negative value of the calculated shape gradient function is exerted, and
then repeating such change processing of the domain shape to optimize the domain shape.

8. A domain shape optimization method for' minimizing a pressure loss with a volume constraint to a stationary flow rate and pressure of a Stokes flow field, the method being **characterized by**:
calculating a shape gradient function of each point on a boundary (2) of a domain (1) of a Stokes flow field as an object,
regarding the domain (1) of the Stokes flow field as the object as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

9. A domain shape optimization method for minimizing a square error part domain integral of a specified flow rate and a flow rate with a volume constraint to a stationary flow rate and pressure of a potential flow a, the method being **characterized by**:
calculating a shape gradient function of each point on a boundary (2) of a domain (1) of a potential flow field as an object,
regarding the domain (1) of the potential flow field as the object as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

10. A domain shape optimization method for minimizing a sound pressure gradient square part domain integral with a volume constraint to a stationary sound pressure of a sound field, the method being **characterized by**:
calculating a shape gradient function of each point on a boundary (2) of a domain (1) of the sound field as an object,
regarding the domain (1) of the sound field as the object as a linear elastic body,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

11. A domain shape optimization method for minimizing a KS functional in relation to a equivalent stress under conditions in which a volume to deformation of a linear elastic body by static load and forcible displacement is restricted to a constraint value or less, that is, maximizing the strength of the body in case of equivalent stress failure criterion, the method being **characterized by**:
calculating a shape gradient function of each point on a boundary (2) of a domain (1) of the linear elastic body as an object,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and
then repeating such change processing of the domain shape to optimize the domain shape.

12. A domain shape optimization method for minimizing a volume under conditions in which a KS functional in relation to an equivalent stress to deformation of a linear elastic body by static load and forcible displacement is restricted to a constraint value or less, the method being **characterized by**:
calculating a shape gradient function of each point on a boundary (2) of a domain (1) of the linear elastic body as an object,
disposing a uniform distribution spring (6) between each point on the boundary (2) of the domain (1) and each point of a fixed coordinate system (5) positioning on a normal line of the boundary (2) from the former point,
changing a domain shape of the domain (1) as the object using deformation of each point on the boundary (2) when a boundary force (4) in proportion to a negative value of the calculated shape gradient function is exerted, and then repeating such change processing of the domain shape to optimize the domain shape.
